# EUROPEAN PATENT APPLICATION

(11) **EP 3 971 714 A1**
(43) Date of publication of application: **23.03.2022**
(21) Application number: 20831854.3
(22) Date of filing: 23.06.2020
(51) Int. Cl.: G06F 9/445

(54) **METHOD AND APPARATUS FOR CALLING SERVICE**

(30) Priority: 28.06.2019 CN 201910574824
(71) Applicant: Huawei Technologies Co., Ltd., Longgang District Shenzhen, Guangdong 518129 (CN)
(72) Inventor: LI, Duan, Shenzhen, Guangdong 518129 (CN); DU, Jingzhou, Shenzhen, Guangdong 518129 (CN); GAO, Peng, Shenzhen, Guangdong 518129 (CN); HUANG, Xueyan, Shenzhen, Guangdong 518129 (CN)
(74) Representative: Maiwald Patent- und Rechtsanwaltsgesellschaft mbH
(86) International application number: PCT/CN2020/097803
(87) International publication number: WO 2020/259514

(57) **Abstract**

A service invoking method, an apparatus, and the like are applied to a terminal device, such as a smartphone or an automated driving device. The method includes: When detecting a user input, the terminal device obtains at least one scenario feature used to describe a scenario in which the terminal device is currently located, determines, based on the user input and the at least one scenario feature, a first parameter associated with a service, and invokes the service based on the first parameter. Therefore, the foregoing method may be used to provide a service for a user based on user habits in different scenarios, to improve user experience.

## Description

### CROSS-REFERENCE TO RELATED APPLICATIONS

This application claims priority to Chinese Patent Application No. 201910574824.2, filed with the China National Intellectual Property Administration on June 28, 2019 and entitled "SERVICE INVOKING METHOD AND APPARATUS", which is incorporated herein by reference in its entirety.

### TECHNICAL FIELD

This application relates to the terminal field, and in particular, to a service invoking method and an apparatus.

### BACKGROUND

As mobile phones play an increasingly important role in people's daily life, speech interaction also frequently occurs in increasingly more scenarios, and people are increasingly dependent on an application with a speech interaction function, such as a voice assistant. The application with the speech interaction function may be applied to a plurality of scenarios such as people's life, work, or learning.

Currently, when a user initiates a speech request to an application with a speech interaction function on a terminal device, the application with the speech interaction function can perform feedback based on the request. For example, when the user sends an instruction "I want to listen to a story" to a voice assistant on a mobile phone, the voice assistant may open an audio application (application, APP), such as Himalaya, and resume playing from a breakpoint at which playing is stopped last time. However, the user may have different story listening requirements in different scenarios. For example, the user may want to listen to an unfinished story A on the way to work, and may want to listen to an unfinished story B on the way back home from work. In an existing technology, only identification of a breakpoint location at which playing is stopped last time is supported, but listening habits of the user in different scenarios are not taken into consideration.

### SUMMARY

Embodiments of this application provide a service invoking method and an apparatus, to resolve a problem that a terminal device cannot provide a service for a user based on user habits in different scenarios.

According to a first aspect, an embodiment of this application provides a service invoking method, and the method is applied to a terminal device. The method includes: When detecting a user input, the terminal device obtains at least one scenario feature used to describe a scenario in which the terminal device is currently located, where the user input is used to indicate the terminal device to invoke a service; and the terminal device determines, based on the user input and the at least one scenario feature, a first parameter associated with the service, and invokes the service based on the first parameter, where the first parameter is a parameter stored by the terminal device when the terminal device uses the service in the scenario in which the terminal device is located last time. Compared with an existing technology in which a user intention is determined only based on a user input to invoke a service for a user, in this embodiment of this application, the terminal device invokes the service based on the user input and the at least one scenario feature, to provide the service for the user based on user habits in different scenarios, so that the user can perceive service continuity, and user experience can be improved.

The "service" herein may be an application, or may be a service in the application or a service provided by an operating system. "Invoke the service" may mean that the service is invoked from a non-running state, or may be that the service is invoked from a background to a foreground, or that the service is changed from any other state to a user-perceivable state, or the like. A specific meaning of "invoke the service" may be different in different application scenarios, and should not be construed as a limitation on this application.

In a possible design, the at least one scenario feature includes at least one of time, a location, weather, a user behavior, a user status, a user expression, and sensor data. By using the foregoing design, the terminal device can obtain a combination of a plurality of scenario features, to more accurately describe the scenario in which the terminal device is currently located.

In a possible design, the terminal device may determine, based on the user input and the at least one scenario feature by using but not limited to the following method, the first parameter associated with the service: The terminal device determines a user intention based on the user input and the at least one scenario feature, and determines the first parameter based on the user intention.

In a possible design, the terminal device may determine the user intention based on the user input and the at least one scenario feature by using but not limited to the following method: If the at least one scenario feature successfully matches a scenario feature group stored on the terminal device, the terminal device determines the user intention based on the user input and the at least one scenario feature. By using the foregoing design, the terminal device can more accurately obtain the user intention.

In a possible design, that the at least one scenario feature successfully matches the scenario feature group stored on the terminal device may mean that the at least one scenario feature is the same as or matches all scenario features in the scenario feature group, or the at least one scenario feature is the same as or matches a part of scenario features in the scenario feature group. By using the foregoing design, the terminal device can accurately determine whether the at least one scenario feature matches the stored scenario feature group.

In a possible design, the terminal device may determine the user intention of the user based on the user input and the at least one scenario feature by using a user intention prediction model. Specifically, the user intention prediction model includes, for example, at least one prediction rule, an i^{th} prediction rule in the at least one prediction rule includes an i^{th} user input set, an i^{th} scenario feature group, and an i^{th} user intention prediction result, and i is a positive integer; and if the user input successfully matches a user input in the i^{th} user input set, and the at least one scenario feature successfully matches the i^{th} scenario feature group, the terminal device may determine that the user intention is the i^{th} user intention prediction result. By using the foregoing design, the terminal device can more accurately predict the user intention.

In a possible design, the user intention prediction model may be obtained by using at least two user logs, and the user log includes a historical user input, a historical scenario feature group, and a user intention truth. By using the foregoing design, the terminal device can obtain the user intention prediction model in a convenient manner.

In a possible design, the method further includes: The terminal device displays a first session interface when detecting the user input, where the first session interface includes corresponding text of the user input. By using the foregoing design, the terminal device can display, for the user, the corresponding text of the user input.

In a possible design, after the terminal device invokes the service based on the first parameter, the terminal device may further switch from the first session interface to an interface corresponding to the service. The interface corresponding to the service includes prompt information, where the prompt information is used to indicate that the service is invoked based on the at least one scenario feature; and/or the terminal device feeds back a prompt tone, where the prompt tone is used to indicate that the service is invoked based on the at least one scenario feature. By using the foregoing design, the terminal device may display the prompt information in the interface corresponding to the service or feed back the prompt tone, to indicate that the service is invoked by the user based on the at least one scenario feature.

Further, after switching from the first session interface to the interface corresponding to the service, the terminal device may further display a virtual button in the interface corresponding to the service, where the virtual button is in a first state, and the first state is used to indicate a state of waiting to be triggered. By using the foregoing design, the user can quickly trigger the virtual button.

Then, when detecting that the virtual button is triggered, the terminal device may switch from the interface corresponding to the service to a second session interface, where the virtual button is displayed in a second state in the second session interface, and the second state is used to indicate that a state in which a new user input is being received. By using the foregoing design, the user can be notified that the terminal device is receiving the new user input.

In a possible design, the second session interface covers the interface corresponding to the service, a size of the second session interface is the same as a size of the interface corresponding to the service, and a background color of the second session interface is determined based on a background color of the interface corresponding to the service. For example, hue of the background color of the second session interface is approximately the same as hue of the background color of the interface corresponding to the service, and only the color is slightly darkened or slightly lightened. In the foregoing design, user experience of observing an interface change can be improved.

In a possible design, the method further includes: When detecting the new user input, the terminal device may further display the virtual button in a third state in the second session interface, where the third state is used to indicate a state in which received speech is being processed. By using the foregoing design, the user can be notified that the terminal device is processing the received new user input.

According to a second aspect, an embodiment of this application provides a terminal device, including a processor and a memory. The memory is configured to store one or more computer programs. When the one or more computer programs stored in the memory are executed by the processor, the terminal device is enabled to implement the method in any possible design in any one of the foregoing aspects.

According to a third aspect, an embodiment of this application further provides an apparatus. The apparatus includes modules/units for performing the method in any possible design in any one of the foregoing aspects. These modules/units may be implemented by hardware, or may be implemented by hardware executing corresponding software.

According to a fourth aspect, an embodiment of this application further provides a computer-readable storage medium. The computer-readable storage medium includes a computer program. When the computer program is run on a terminal device, the terminal device is enabled to perform the method in any possible design in any one of the foregoing aspects.

According to a fifth aspect, an embodiment of this application further provides a computer program product. When the computer program product runs on a terminal device, the terminal device is enabled to perform the method in any possible design in any one of the foregoing aspects.

### BRIEF DESCRIPTION OF DRAWINGS

FIG. 1 is a schematic diagram of speech interaction in this application;
FIG. 2 is a schematic diagram of a possible application scenario in this application;
FIG. 3 is a schematic diagram of a structure of a mobile phone 100 in this application;
FIG. 4 is an outlined flowchart of service invoking in this application;
FIG. 5 is a schematic diagram of an establishment phase, an execution phase, and a feedback phase of a user intention prediction model in this application;
FIG. 6 is a schematic diagram 1 of a user interface in this application;
FIG. 7 is a schematic diagram 2 of a user interface in this application;
FIG. 8 is a schematic diagram 3 of a user interface in this application;
FIG. 9 is a schematic diagram 4 of a user interface in this application;
FIG. 10 (a) and FIG. 10 (b) are schematic diagrams 5 of a user interface in this application;
FIG. 11 (a) and FIG. 11 (b) are schematic diagrams 6 of a user interface in this application;
FIG. 12 (a) and FIG. 12 (b) are schematic diagrams 7 of a user interface in this application; and
FIG. 13 (a) and FIG. 13 (b) are schematic diagrams 8 of a user interface in this application.

### DESCRIPTION OF EMBODIMENTS

The following describes the embodiments of this application with reference to the accompanying drawings.

This application may be applied to a terminal device in a general sense, for example, an electronic device such as a mobile phone, a tablet computer, a notebook computer, a smartwatch, a television set, a smart soundbox, a vehicle-mounted system, a self-driving system, or virtual reality/mixed reality/augmented reality. The terminal device may carry iOS^{®}, Android^{®}, Microsoft^{®}, or another operating system.

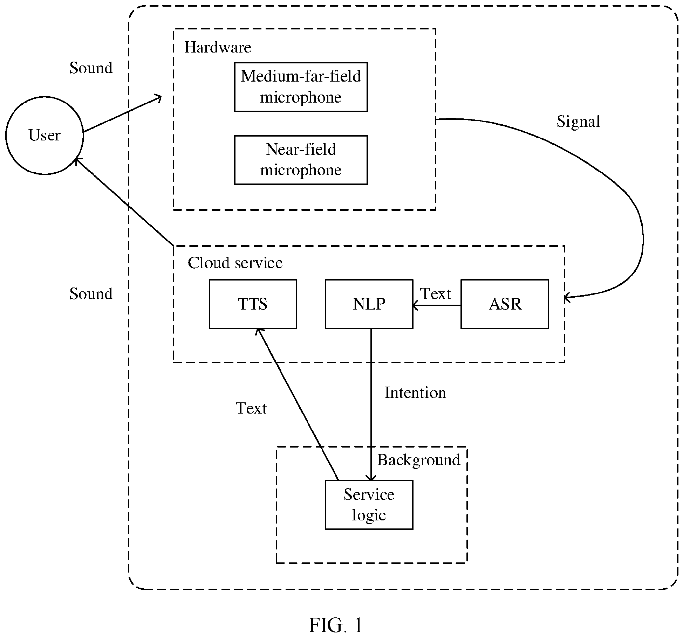

IBM and Microsoft have conducted researches on a speech recognition technology earlier. At the 1964 World's Fair, IBM showed the world a "shoe box recognizer (shoe box recognizer)" of digital speech recognition. The speech recognition system released by IBM in 1984 can recognize 5000 words. In 1995, Microsoft launched the speech application programming interface (Speech API) that can support recognition and reading of a plurality of languages including English, Chinese, Japanese, and the like. In a current speech interaction technology, a sound signal is received by using a medium-far-field microphone and a near-field microphone, the sound signal is conducted to an automatic speech recognition (automatic speech recognition, ASR) module, the sound signal is converted into text by using the ASR module, and then a user intention to be expressed by the text is understood by using a natural language understanding (natural language understanding, NLP) module. Background service logic enters service logic computing based on the obtained intention, and outputs a text result of the intention, and then the text result of the intention is converted into sound by using a text to speech (Text To Speech, TTS) module. In this way, a complete speech interaction process is formed, as shown in FIG. 1. The foregoing technology is applicable to an application with a speech interaction function, such as a voice assistant. In this application, only the voice assistant is used as an example for description, and this does not constitute a limitation on this application.

The following describes some terms in the embodiments of this application, to facilitate understanding for a person skilled in the art.

An application in the embodiments of this application is a computer program that can implement one or more specific functions. Generally, a plurality of applications can be installed on the terminal device, for example, a camera application, a short message application, a multimedia message application, various mailbox applications, a chat software application, an audio application, a music application, a web browsing application, a photo application, and an office application. The application mentioned below may be an application installed on the terminal device before delivery, or may be an application downloaded by a user from a network side in a process of using the terminal device.

A service in the embodiments of this application is a specific function or task that can be completed by an application by performing a specific operation. Each service has a corresponding service interface, and may be invoked by using the service interface. A provider of the application may disclose the service interface for another application to invoke the service provided by the provider. For example, one application may provide one or more services. For example, a navigation application A may provide a map display service, a navigation service, and the like. The navigation application A may disclose a "map display service" interface and a "navigation service" interface. When a user input received by the voice assistant is "Query the driving route from the location A to the location B", the voice assistant may start, by using the "navigation service" interface of the navigation application A, the navigation application A to invoke the navigation service. The service in the embodiments of this application may include a continuous service and a discontinuous service. The continuous service is a service whose content is related to historical service content, for example, listening to music, listening to news, listening to the radio, listening to a book review, listening to cross talk, and listening to a novel. The discontinuous service is a service whose content is unrelated to historical service content, for example, checking the weather, setting an alarm clock, querying a road condition, calculating, querying a stock, and browsing a memo. A label of the continuous service and a label of the discontinuous service may be marked by a developer for the service provided by the application. The continuous service may also be referred to as a process service, and the discontinuous service may also be referred to as a nonprocess service.

The user input in the embodiments of this application is used to indicate a terminal device to invoke the service, and a form of the user input may include but is not limited to speech, text, a key, a gesture, and the like. For example, one key or a combination of a plurality of keys corresponds to one type of user input. For example, #1 is used to indicate the terminal device to play music, and #2 is used to indicate the terminal device to check the weather. One gesture corresponds to one type of user input. For example, a "Z" gesture is used to indicate the terminal device to play music, and a three-finger sliding-down gesture is used to indicate the terminal device to enable a calculator. For example, content entered by the user may be "listen to music", "check the weather", or "open an application A", and this is not limited in this application.

A scenario feature in the embodiments of this application may include but is not limited to time, a location, weather, a user behavior, a user status, a user expression, other sensor data, and the like. The user expression may be an expression of the user when the user input occurs. For example, when the terminal device detects the user input, a camera on the terminal device collects a user image, and a processor analyzes the user image to obtain the user expression. The user behavior may include but is not limited to running, driving, and the like. For example, when the terminal device detects the user input, the terminal device may determine the user behavior by using a gyroscope sensor and/or an acceleration sensor, for example, determine whether the user is still or moving. The user status may be determined by using an identifier of the user status in an application running in a background of the terminal device. For example, when the terminal device detects the user input, the terminal device learns that a current status of the user in a DingTalk application running in the background is "In a Meeting", the terminal device determines that the user status is "In a Meeting" or a busy state. The other sensor data may include but is not limited to color temperature data and the like collected by a color temperature sensor.

A user intention in the embodiments of this application includes a basic intention and a supplementary intention. The basic intention is determined based on the user input, and is used to describe a subject of a user request. The supplementary intention is determined based on at least one scenario feature of a scenario in which the user is located, and is used to describe details of the user request. The at least one scenario feature is obtained by the terminal device when detecting the user input. For example, "listen to songs" is a basic intention, and "listen to a song by Jay Chou" is a supplementary intention, or "listen to a song suitable for a rainy day" is also a supplementary intention.

A first session interface, a second session interface, and an interface corresponding to the service in the embodiments of this application are all possible user interfaces. The interface corresponding to the service is an interface of the application that provides the service.

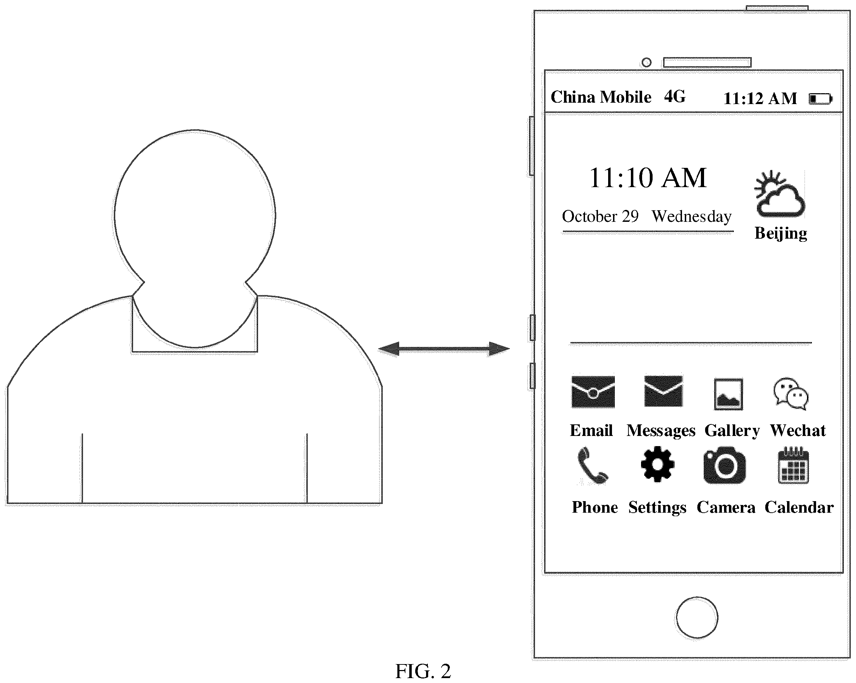

A service invoking method provided in the embodiments of this application may be applied to a scenario shown in FIG. 2. In FIG. 2, the terminal device may detect a user input in a manner such as detecting input information on a touchscreen or detecting sound information by using a microphone, obtain at least one scenario feature used to describe a scenario in which the terminal device is currently located, determine, based on the user input and the at least one scenario feature, a first parameter associated with a service, and invoke the service based on the first parameter. Implementation details of this process are described in detail in the following embodiments.

It should be noted that, terms used in the following embodiments are merely for the purpose of describing specific embodiments, but are not intended to limit this application. It should be understood that, in the embodiments of this application, "one or more" means one, two, or more; and "and/or" describes an association relationship between associated objects, and indicates that three relationships may exist, for example, A and/or B may indicate a case in which only A exists, both A and B exist, and only B exists, where A and B may be singular or plural. In addition, unless otherwise specified, the character "/" in this specification generally indicates an "or" relationship between the associated objects. In addition, in the descriptions of the embodiments of the present invention, terms such as "first" and "second" are merely used for distinction and description, but cannot be understood as an indication or implication of relative importance, or understood as an indication or implication of a sequence.

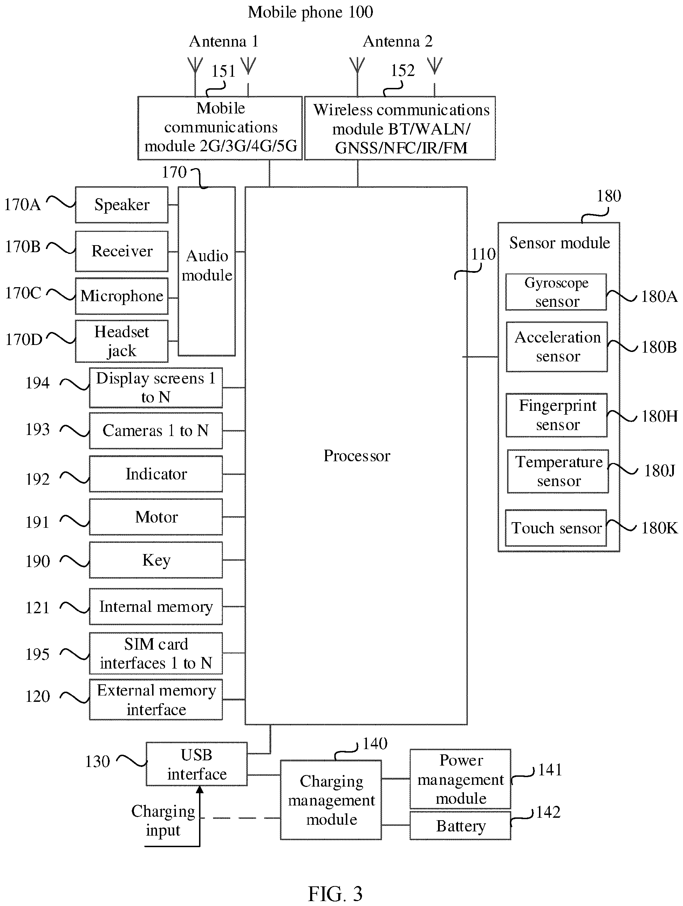

For example, the terminal device is a mobile phone. FIG. 3 is a schematic diagram of a structure of a mobile phone 100.

The mobile phone 100 may include a processor 110, an external memory interface 120, an internal memory 121, a universal serial bus (universal serial bus, USB) port 130, a charging management module 140, a power management module 141, a battery 142, an antenna 1, an antenna 2, a mobile communications module 151, a wireless communications module 152, an audio module 170, a speaker 170A, a receiver 170B, a microphone 170C, a headset jack 170D, a sensor module 180, a key 190, a motor 191, an indicator 192, a camera 193, a display screen 194, a subscriber identity module (subscriber identity module, SIM) card interface 195, and the like. The sensor module 180 may include a gyroscope sensor 180A, an acceleration sensor 180B, a fingerprint sensor 180H, a temperature sensor 180J, and a touch sensor 180K (certainly, the mobile phone 100 may further include other sensors, such as a pressure sensor, a color temperature sensor, and a bone conduction sensor, which are not shown in the figure).

It may be understood that a structure shown in this embodiment of the present invention does not constitute a specific limitation on the mobile phone 100. In some other embodiments of this application, the mobile phone 100 may include more or fewer components than those shown in the figure, or some components may be combined, or some components may be split, or there may be a different component layout. The components in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural network processing unit (neural network processing unit, NPU), and/or the like. Different processing units may be independent components, or may be integrated into one or more processors. The controller may be a nerve center and a command center of the mobile phone 100. The controller may generate an operation control signal based on instruction operation code and a time sequence signal, to control to read instructions and execute the instructions.

A memory may be further disposed in the processor 110, and is configured to store instructions and data. In some embodiments, the memory in the processor 110 is a cache memory. The memory may store instructions or data that has just been used or is cyclically used by the processor 110. If the processor 110 needs to use the instructions or the data again, the processor 110 may directly invoke the instructions or the data from the memory, to avoid repeated access and reduce waiting time of the processor 110. Therefore, system efficiency is improved.

The processor 110 may run the service invoking method provided in the embodiments of this application, to resolve a problem that the terminal device cannot provide a service for a user based on user habits in different scenarios, so that user experience is improved. When the processor 110 is integrated with different components such as a CPU and a GPU, the CPU and the GPU may cooperate with each other to perform the service invoking method provided in the embodiments of this application. For example, some methods in the service invoking method are performed by the CPU, and some other methods are performed by the GPU, to resolve the problem that the terminal device cannot provide the service for the user based on the user habits in different scenarios, so that user experience is improved.

The display screen 194 is configured to display an image, a video, and the like. The display screen 194 includes a display panel. The display panel may use a liquid crystal display (liquid crystal display, LCD), an organic light-emitting diode (organic light-emitting diode, OLED), an active-matrix organic light emitting diode or an active-matrix organic light emitting diode (active-matrix organic light emitting diode, AMOLED), a flexible light-emitting diode (flex light-emitting diode, FLED), a mini LED, a micro-LED, a micro-OLED, a quantum dot light emitting diode (quantum dot light emitting diode, QLED), or the like. In some embodiments, the mobile phone 100 may include one or N display screens 194, where N is a positive integer greater than 1.

The camera 193 (a front-facing camera or a rear-facing camera) is configured to capture a static image or a video. Usually, the camera 193 may include a photosensitive element such as a lens group and an image sensor. The lens group includes a plurality of lenses (convex lenses or concave lenses), and is configured to: collect an optical signal reflected by a to-be-photographed object, and transfer the collected optical signal to the image sensor. The image sensor generates an original image of the to-be-photographed object based on the optical signal. After collecting the original image, the camera 193 may send the original image to the processor 110. The processor 110 may shoot a user image by using the camera 193 when detecting the user input. In addition, the camera 193 shown in FIG. 1 may include one to N cameras.

The internal memory 121 may be configured to store computer-executable program code. The executable program code includes instructions. The processor 110 runs the instructions stored in the internal memory 121, to perform various function applications of the mobile phone 100 and data processing. The internal memory 121 may include a program storage area and a data storage area. The program storage area may store code of an operating system, an application program (for example, an audio application or an SMS application), or the like. The data storage area may store data (for example, at least one scenario feature or a scenario feature group) created during use of the mobile phone 100.

The internal memory 121 may further store code of the service invoking method provided in this embodiment of this application. When the code that is of the service invoking method provided in the embodiments of this application and that is stored in the internal memory 121 is run by the processor 110, the problem that the terminal device cannot provide the service for the user based on the user habits in different scenarios is resolved, so that user experience is improved.

In addition, the internal memory 121 may include a high-speed random access memory, or may include a nonvolatile memory, for example, at least one magnetic disk storage device, a flash memory device, or a universal flash storage (universal flash storage, UFS).

Certainly, the code of the service invoking method provided in this embodiment of this application may alternatively be stored in an external memory. In this case, the processor 110 may run, by using the external memory interface 120, the code that is of the service invoking method and that is stored in the external memory. In this case, the problem that the terminal device cannot provide the service for the user based on the user habits in different scenarios can also be resolved, so that user experience is improved.

The following describes a function of the sensor module 180.

The gyroscope sensor 180A may be configured to determine a motion posture of the mobile phone 100. In some embodiments, an angular velocity of the mobile phone 100 around three axes (namely, axes x, y, and z) may be determined by using the gyroscope sensor 180A. In other words, the gyroscope sensor 180A may be configured to detect a current motion status of the mobile phone 100, for example, whether the mobile phone 100 is in a shaken or static state.

The acceleration sensor 180B may detect values of accelerations in various directions (usually in directions of the three axes) of the mobile phone 100. In other words, the gyroscope sensor 180A may be configured to detect the current motion status of the mobile phone 100, for example, the shaken or static state.

The gyroscope sensor 180A (or the acceleration sensor 180B) may send, to the processor 110, motion status information (for example, the angular velocity) obtained through detection. The processor 110 determines, based on the motion status information, whether the mobile phone is currently in a handheld state or a tripod state (for example, when the angular velocity is not 0, it indicates that the mobile phone 100 is in the handheld state).

The processor 110 determines a user behavior by using the gyroscope sensor 180A and/or the acceleration sensor 180B, for example, determines whether the user is still or moving, and the user behavior is used as a scenario feature.

The fingerprint sensor 180H is configured to collect a fingerprint. The mobile phone 100 may use a feature of the collected fingerprint to implement fingerprint unlocking, application lock access, fingerprint-based photographing, fingerprint-based call answering, and the like.

The touch sensor 180K is also referred to as a "touch panel". The touch sensor 180K may be disposed on the display screen 194, and the touch sensor 180K and the display screen 194 form a touchscreen. The touch sensor 180K is configured to detect a touch operation acting on or near the touch sensor 180K. The touch sensor may transfer the detected touch operation to the processor 110, to determine a type of a touch event. The display screen 194 may provide a visual output related to the touch operation. In some other embodiments, the touch sensor 180K may alternatively be disposed on a surface of the mobile phone 100 and is at a location different from that of the display screen 194. The touch sensor 180K may transfer a detected user gesture to the processor 110.

For example, the display screen 194 of the mobile phone 100 displays a home screen, and the home screen includes icons of a plurality of applications (for example, an audio application and a music application).

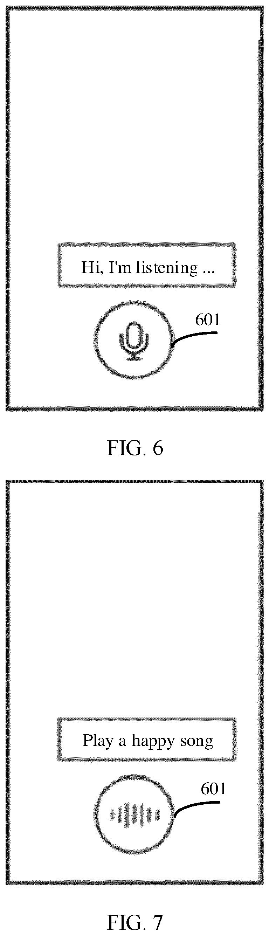

The user taps an icon of a voice assistant on a home screen by using the touch sensor 180K, to trigger the processor 110 to start the voice assistant. The display screen 194 displays a session interface of the voice assistant, as shown in FIG. 6.

A wireless communication function of the mobile phone 100 may be implemented by using the antenna 1, the antenna 2, the mobile communications module 151, the wireless communications module 152, the modem processor, the baseband processor, and the like.

The antenna 1 and the antenna 2 each are configured to transmit and receive electromagnetic wave signals. Each antenna in the mobile phone 100 may be configured to cover one or more communications frequency bands. Different antennas may be further multiplexed, to increase antenna utilization. For example, the antenna 1 may be multiplexed as a diversity antenna in a wireless local area network. In some other embodiments, an antenna may be used in combination with a tuning switch.

The mobile communications module 151 can provide a solution, applied to the mobile phone 100, for wireless communication including 2G/3G/4G/5G and the like. The mobile communications module 151 may include at least one filter, a switch, a power amplifier, a low noise amplifier (low noise amplifier, LNA), and the like. The mobile communications module 151 may receive an electromagnetic wave through the antenna 1, perform processing such as filtering or amplification on the received electromagnetic wave, and transfer the electromagnetic wave to the modem processor for demodulation. The mobile communications module 150 may further amplify a signal modulated by the modem processor, and convert the signal into an electromagnetic wave through the antenna 1 for radiation. In some embodiments, at least a part of function modules of the mobile communications module 151 may be disposed in the processor 110. In some embodiments, at least a part of function modules of the mobile communications module 151 and at least a part of modules of the processor 110 may be disposed in a same device.

The modem processor may include a modulator and a demodulator. The modulator is configured to modulate a to-be-sent low-frequency baseband signal into a medium or high-frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor, and then transmitted to the application processor. The application processor outputs a sound signal by using an audio device (which is not limited to the speaker 170A, the receiver 170B, or the like), or displays an image or a video by using the display screen 194. In some embodiments, the modem processor may be an independent component. In some other embodiments, the modem processor may be independent of the processor 110, and is disposed in a same device as the mobile communications module 150 or another function module.

The wireless communications module 152 may provide a solution, applied to the mobile phone 100, for wireless communication including a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field wireless communication (near field communication, NFC) technology, an infrared (infrared, IR) technology, or the like. The wireless communications module 152 may be one or more devices integrating at least one communications processing module. The wireless communications module 152 receives an electromagnetic wave through the antenna 2, performs frequency modulation and filtering processing on an electromagnetic wave signal, and sends a processed signal to the processor 110. The wireless communications module 152 may further receive a to-be-sent signal from the processor 110, perform frequency modulation and amplification on the signal, and convert the signal into an electromagnetic wave through the antenna 2 for radiation.

In some embodiments of this application, the mobile phone 100 may send the at least one scenario feature and the user input to another device by using the mobile communications module 151 or the wireless communications module 152. The another device obtains, by using the service invoking method provided in the embodiments of this application, a service that needs to be invoked by the user. The mobile phone 100 may further receive, by using the mobile communications module 151 or the wireless communications module 152, information that is sent by the another device and that is used to indicate the service that needs to be invoked by the user. The processor 110 of the mobile phone 100 matches a service interface based on the information that is used to indicate the service that needs to be invoked by the user, to start an application to invoke the service.

In addition, the mobile phone 100 may implement an audio function by using the audio module 170, the speaker 170A, the receiver 170B, the microphone 170C, the headset jack 170D, the application processor, and the like. For example, when the user input is speech, the mobile phone 100 may detect the user input by using the microphone 170C. The mobile phone 100 may receive input of the key 190, and generate key signal input related to a user setting and function control of the mobile phone 100. For example, when the user input is a key, the mobile phone 100 may detect the user input by using the key 190. The mobile phone 100 may generate a vibration prompt (for example, an incoming call vibration prompt) by using the motor 191. The indicator 192 in the mobile phone 100 may be an indicator light, may be configured to indicate a charging status and a power change, and may also be configured to indicate a message, a missed call, a notification, and the like. The SIM card interface 195 in the mobile phone 100 is configured to connect to a SIM card. The SIM card may be inserted into the SIM card interface 195 or plugged from the SIM card interface 195, to implement contact with or separation from the mobile phone 100.

It should be understood that during actual application, the mobile phone 100 may include more or fewer components than those shown in FIG. 1. This is not limited in this embodiment of this application.

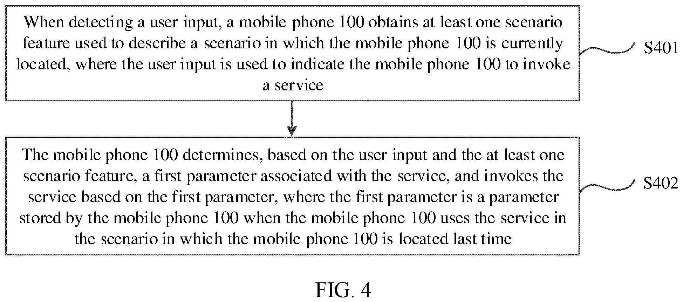

A process of invoking a service by using the mobile phone 100 is described below with reference to a case in which the embodiments of this application are applied to a mobile phone architecture shown in FIG. 3. FIG. 4 is a schematic flowchart of a service invoking method according to an embodiment of this application. The method is applied to the mobile phone 100 shown in FIG. 3 as an example for description below. In the following descriptions, the term "when ... " may be interpreted as "if ...", "after ...", "in response to determining... ", or "in response to detecting ...". Similarly, according to the context, the phrase "when it is determined that" or "if (a stated condition or event) is detected" may be interpreted as a meaning of "if it is determined that", "in response to determining", "when (a stated condition or event) is detected", or "in response to detecting (a stated condition or event)". A procedure of the method includes the following steps.

S401: When detecting a user input, the mobile phone 100 obtains at least one scenario feature used to describe a scenario in which the mobile phone 100 is currently located.

To provide better user experience, when the processor 110 in the mobile phone 100 detects the user input, the processor 110 may display a first session interface on the display screen 194, and text information corresponding to the user input is displayed in the first session interface.

In an optional embodiment, when the user input is speech, after a voice assistant is woken up or a user enables the voice assistant, the processor 110 may detect the speech by using the microphone 170C. An ASR module in the processor 110 converts the speech entered by the user into text, and the display screen 194 of the mobile phone 100 displays the first session interface, and the first session interface displays the text converted from the speech. In another optional embodiment, when the user input is a gesture, the mobile phone 100 may detect the user input by using the touch sensor 180K. The processor 110 converts, based on a stored correspondence between a gesture and a user request, a user request corresponding to the detected gesture into text. The first session interface is displayed on the display screen 194, and the text converted from the user request corresponding to the gesture is displayed in the first session interface.

When the user input is detected, the at least one scenario feature obtained by the mobile phone 100 includes but is not limited to time, a location, weather, a user behavior, a user status, a user expression, other sensor data, and the like. For example, the processor 110 may collect a user image by using the camera 193, and the processor 110 analyzes the user image to obtain a user expression as a scenario feature. For another example, the processor 110 may alternatively determine the user behavior by using the gyroscope sensor 180A and/or the acceleration sensor 180B. For example, if it is determined that the user behavior is running, running may also be used as a scenario feature.

S402: The mobile phone 100 determines, based on the user input and the at least one scenario feature, a first parameter associated with a service, and invokes the service based on the first parameter, where the first parameter is a parameter stored by the mobile phone 100 when the mobile phone 100 uses the service in the scenario in which the mobile phone 100 is located last time.

In a possible design, the mobile phone 100 determines a user intention based on the user input and the at least one scenario feature, and determines the first parameter based on the user intention. If the at least one scenario feature obtained by the mobile phone 100 successfully matches a scenario feature group stored on the mobile phone 100, the mobile phone 100 determines the user intention based on the user input and the at least one scenario feature. For example, if the processor 110 determines that the at least one scenario feature obtained in S401 successfully matches a scenario feature group stored in the internal memory 121 of the mobile phone 100, the processor 110 may determine the user intention based on the user input and the at least one scenario feature by using a user intention prediction model. That the at least one scenario feature successfully matches the scenario feature group stored in the internal memory 121 may mean that the at least one scenario feature is the same as or matches all scenario features in the stored scenario feature group, or may mean that the at least one scenario feature is the same as or matches a part of scenario features in the stored scenario feature group. The user intention prediction model may alternatively be prestored in the internal memory 121 of the mobile phone 100, and the scenario feature group may be a part of content included in the user intention prediction model.

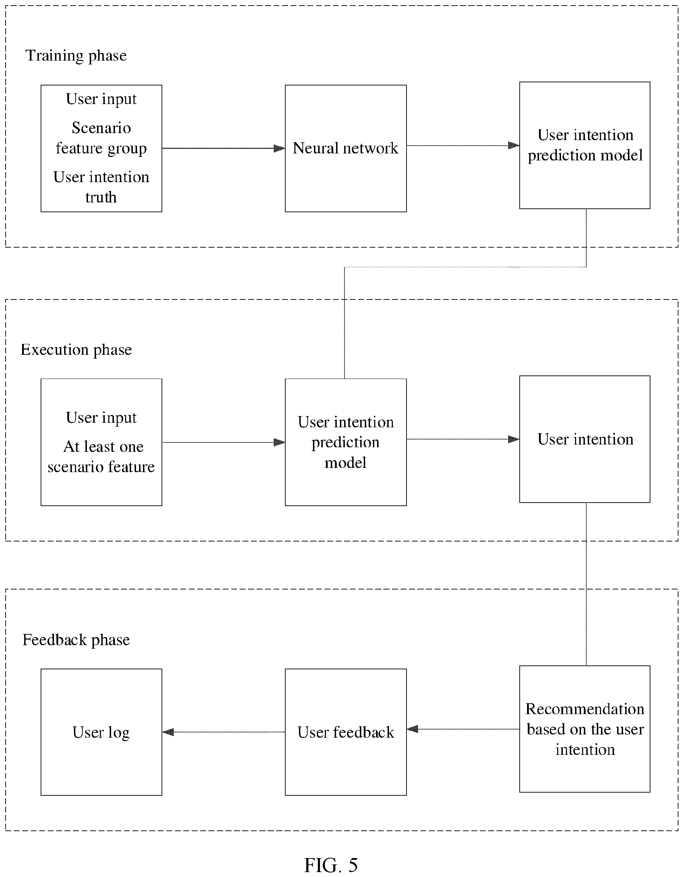

It should be understood that, only the processor 110 is used as an example below to describe an establishment phase, an execution phase, and a feedback phase of the user intention prediction model. As shown in FIG. 5, the processor 110 may be the processor 110 in the mobile phone 100.

In the establishment phase of the user intention prediction model, the processor 110 obtains a user log, extracts a historical user input, a historical scenario feature group, and a user intention truth from the user log, and inputs the historical user input, the historical scenario feature group, and the user intention truth to a neural network for training, to obtain the user intention prediction model. It should be understood that the user intention prediction model may be obtained by performing training by using a plurality of existing neural network mathematical models such as a BP algorithm. Details are not described herein.

For example, a user log 1 is: A historical user input is "Listen to audio"; a historical scenario feature group includes: Time: "21:30, Monday"; Weather: "Sunny"; User Behavior: "Driving" and "Destination: Home"; and a user intention truth is: "Listen to audio of *The Lost Tomb".*

A user log 2 is: A historical user input is "Listen to audio"; a historical scenario feature group includes: Time: "21:13, Tuesday"; Weather: "Light rain"; User Behavior: "Driving" and "Destination: Home"; and a user intention truth is: "Listen to audio of *The Lost Tomb".*

A user log 3 is: A historical user input is "Tell a story"; a historical scenario feature group includes: Time: "21:27, Wednesday"; Weather: "Cloudy"; User Behavior: "Driving" and "Destination: Home"; and a user intention truth is: "Listen to audio of *The Lost Tomb".*

A user log 4 is: A historical user input is "Listen to audio"; a historical scenario feature group includes: Time: "21:46, Thursday"; Weather: "Sunny"; User Behavior: "Driving" and "Destination: Home"; and a user intention truth is: "Listen to audio of *The Lost Tomb".*

A user log 5 is: A historical user input is "Tell a story"; a historical scenario feature group includes: Time: "21:51, Friday"; Weather: "Heavy rain"; User Behavior: "Driving" and "Destination: Home"; and a user intention truth is: "Listen to audio of *The Lost Tomb".*

The processor 110 extracts the historical user input, the historical scenario feature group, and the user intention truth from the foregoing user logs 1 to 5, and inputs the historical user input, the historical scenario feature group, and the user intention truth to the neural network for training, to obtain a prediction rule (referred to as a prediction rule 1 for short below) of the user intention prediction model. The prediction rule 1 includes three parts: a user input set, a scenario feature group, and a user intention prediction result. The user input set includes "Listen to audio" and "Tell a story". The scenario feature group includes two scenario features: Time: "Nighttime (21:00 to 22:00)", "Workday (Monday to Friday)"; and User Behavior: "Driving" and "Destination: Home". The user intention prediction result includes a basic intention and a supplementary intention, where the basic intention is "Listen to audio or tell a story", and the supplementary intention is "Listen to audio of *The Lost Tomb".*

For another example, a user log 1 is: A historical user input is "Listen to music"; a historical scenario feature group includes: Time: "20:30"; Location: "Gym A"; User behavior: "Running"; and a user intention truth is: "Listen to songs in a music list 1".

A user log 2 is: A historical user input is "Listen to songs"; a historical scenario feature group includes: Time: "20:10"; Location: "Gym A"; User behavior: "Running"; and a user intention truth is: "Listen to songs in a music list 1".

A user log 3 is: A historical user input is "Open QQ Music"; a historical scenario feature group includes: Time: "20:40"; Location: "Gym A"; User behavior: "Running"; and a user intention truth is: "Listen to songs in a music list 1".

The processor 110 extracts the historical user input, the historical scenario feature group, and the user intention truth from the foregoing user logs 1 to 3, and inputs the historical user input, the historical scenario feature group, and the user intention truth to the neural network for training, to obtain a prediction rule (referred to as a prediction rule 2 for short below) of the user intention prediction model. The prediction rule 2 includes three parts: a user input set, a scenario feature group, and a user intention prediction result. The user input set includes: "Listen to music", "Listen to songs", or "Open QQ music". The scenario feature group includes three scenario features: Time: "Nighttime (20:00 to 21:00)"; Location: "Gym A"; User behavior: "Running". The user intention prediction result includes a basic intention and a supplementary intention, where the basic intention is "Listen to music or listen to songs", and the supplementary intention is "Listen to songs in a music list 1".

In the execution phase of the user intention prediction model, the processor 110 determines whether the obtained at least one scenario feature matches a scenario feature group in at least one stored scenario feature group, and if yes, determines the user intention based on the user input and the at least one scenario feature by using the user intention prediction model, or otherwise, determines the user intention based on the user input. For example, the processor 110 converts speech entered by the user into text, and then understands, by using an NLP module, a user intention to be expressed by the text.

For example, in the execution phase of the user intention prediction model, the mobile phone 100 detects, by using the microphone 170C, the speech entered by the user. The ASR module in the processor converts the speech entered by the user into text "Tell a story", and obtains two scenario features: Time: "21:22", "Friday"; User behavior: "Driving" and "Destination: Home". The processor 110 in the mobile phone 100 determines that the foregoing two scenario features successfully match the scenario feature group corresponding to the prediction rule 1, where the time in the foregoing two scenario features falls within a time range in the scenario feature group corresponding to the prediction rule 1, and the user behavior in the foregoing two scenario features is the same as the user behavior in the scenario feature group corresponding to the prediction rule 1. Based on the speech entered by the user and the two scenario features obtained by the mobile phone 100, the processor 110 uses the user intention prediction result corresponding to the prediction rule 1 as a user intention that includes a basic intention "Tell a story" and a supplementary intention "Listen to audio of *The Lost Tomb".*

For example, the mobile phone 100 detects, by using the microphone 170C, the speech entered by the user. The ASR module in the processor converts the speech entered by the user into text "Listen to songs", and obtains three scenario features: Time: "20:22"; Location: "Gym A"; User behavior: "Running". The processor 110 in the mobile phone 100 determines that the foregoing three scenario features successfully match the scenario feature group corresponding to the prediction rule 2, where the time in the foregoing three scenario features falls within a time range in the scenario feature group corresponding to the prediction rule 2, the location in the foregoing three scenario features is the same as the location in the scenario feature group corresponding to the prediction rule 2, and the user behavior in the foregoing three scenario features is the same as the user behavior in the scenario feature group corresponding to the prediction rule 2. Based on the speech entered by the user and the three scenario features obtained by the mobile phone 100, the processor 110 uses the user intention prediction result corresponding to the prediction rule 2 as a user intention that includes a basic intention "Listen to songs" and a supplementary intention "Listen to songs in a music list 1".

In the feedback phase of the user intention prediction model, the processor 110 records a user log for each user input, and is configured to subsequently train and improve the user intention prediction model.

For example, in the feedback phase of the user intention prediction model, after recommending to the user to resume listening to the audio of *The Lost Tomb,* the mobile phone 100 records whether the user accepts the recommendation. If the user accepts the recommendation, in other words, resumes listening to the audio of *The Lost Tomb,* a user log is added. For example, the log is specifically: A historical user input is: "Tell a story"; a historical scenario feature group includes: Time: "21:22", "Friday"; User behavior: "Driving" and "Destination: Home"; and a user intention truth is: "Listen to audio of *The Lost Tomb*". If the user does not accept the recommendation but chooses another audio program, a user log may not be generated or a user log is generated. For example, the log is specifically: A historical user input is: "Tell a story"; a historical scenario feature group includes: Time: "21:22", "Friday"; User behavior: "Driving" and "Destination: Home"; and a user intention truth is: "Listen to audio of *The Journey to the West".*

Further, the mobile phone 100 determines the first parameter based on the user intention. For example, if the processor 110 determines, based on the user intention, that the service that needs to be invoked is a continuous service, the processor 110 determines that the service is associated with the first parameter; in other words, the service needs to be invoked based on the first parameter. For example, when the user drives home at 21:22 on Friday, the user says "Tell a story" to the voice assistant on the mobile phone 100, and the mobile phone 100 obtains two scenario features: Time: "21: 22", "Friday"; User behavior: "Driving" and "Destination: Home". The processor 110 in the mobile phone 100 determines that the foregoing two scenario features successfully match the scenario feature group corresponding to the prediction rule 1. The processor 110 uses the user intention prediction result corresponding to the prediction rule 1 as a user intention based on the speech entered by the user and the two scenario features obtained by the mobile phone 100, and the user intention includes a basic intention "Tell a story" and a supplementary intention "Listen to audio of *The Lost Tomb".* The mobile phone 100 determines, based on the user intention, that the service that needs to be invoked is a continuous service, and associates the service with the first parameter; in other words, at a breakpoint location (for example, the 28^{th} minute and 30^{th} second of the third episode) at which the mobile phone 100 stops playing *The Lost Tomb* when the scenario feature group corresponding to the prediction rule 1 is successfully matched last time, the mobile phone 100 starts Himalaya, and resumes playing from the breakpoint location at which play of *The Lost Tomb* stops last time. Therefore, in the method provided in this embodiment of this application, a service can be provided for the user based on a user habit in the scenario in which the user is currently located, so that user experience can be improved.

In addition, to better improve user experience, when invoking the service, the processor 110 may control the display screen 194 to switch from the first session interface to the interface corresponding to the service, and the interface corresponding to the service includes prompt information. The prompt information may include but is not limited to text, a graph, element color, an element dynamic effect, and the like. For example, the processor 110 may display a prompt box in the interface corresponding to the service, and the prompt box includes the prompt information. The prompt box may be located at an upper middle location in the interface corresponding to the service, or may be located at a lower middle location in the interface corresponding to the service, or the prompt box may be floating in the interface corresponding to the service. For another example, the mobile phone 100 displays the prompt information in the interface corresponding to the service within preset duration, and hides the prompt information after the preset duration expires. For example, when starting an application corresponding to the service that needs to be invoked, the processor 110 simultaneously starts a timer, and controls the display screen 194 to switch from the first session interface to the interface corresponding to the service, and displays the prompt box in the interface corresponding to the service. Timing duration of the timer is first duration. After the timer reaches the first duration, the processor 110 hides the prompt box. In another possible design, the processor 110 invokes the service, controls the display screen 194 to switch from the first session interface to the interface corresponding to the service, and feeds back a prompt tone by using the speaker 170A. Both the prompt information and the prompt tone may be used to notify the user that the service is invoked based on the at least one scenario feature, even though the user perceives that the mobile phone 100 provides the service for the user based on the user habit in the scenario in which the user is currently located.

Further, to better improve user experience, the interface corresponding to the service may be a full-screen interface, the interface corresponding to the service includes a virtual button, the virtual button may also be referred to as a speech triggering object, and the virtual button is in a first state, and the first state may also be referred to as a default state and is used to indicate that the virtual button waits to be triggered, so that the user can quickly initiate the user input. A location of the virtual button is movable. For example, the user may drag the virtual button to move in the interface corresponding to the service. Alternatively, the location of the virtual button is fixed. For example, the virtual button is located at an upper right corner of the interface corresponding to the service or the virtual button is located at a middle location of a lower part of the interface corresponding to the service. Optionally, a background color of the virtual button may be determined based on a background color of the interface corresponding to the service. For example, the virtual button may belong to a same color system as the background color of the interface corresponding to the service, and the background color of the virtual button may be lighter or darker than the background color of the interface corresponding to the service. If the user initiates a new user input by using the virtual button, for example, the user may initiate a voice input by touching and holding or tapping the virtual button. In this case, the interface displayed on the display screen 194 of the mobile phone 100 is switched from the interface corresponding to the service to a second session interface. A switching process may be specifically that the second session interface covers the interface corresponding to the service, and the second session interface may have a same size as the interface corresponding to the service. The second session interface also includes the virtual button, and the virtual button is in a second state. The second state may also be referred to as a receiving state and is used to indicate that the virtual button is receiving the new user input. Optionally, a background color of the second session interface may also be determined based on the background color of the interface corresponding to the service. For example, the background color of the second session interface may belong to the same color system as the background color of the interface corresponding to the service, and the background color of the second session interface may be lighter or darker than the background color of the interface corresponding to the service. Optionally, the second session interface may further be in a translucent effect, and transparency of the second session interface may be a preset value, for example, 50%. The background color of the virtual button may also be determined based on the background color of the interface corresponding to the service. When detecting the new user input, the mobile phone 100 displays the virtual button as a third state. The third state may also be referred to as a feedback state and is used to indicate that the virtual button is processing received speech.

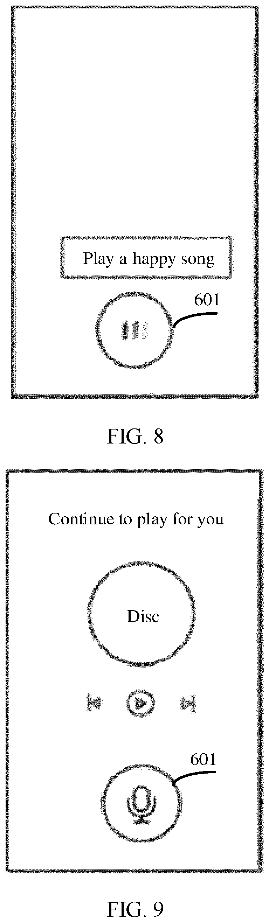

For example, the user may perform a voice input in a screen-off state or a screen-on state of the mobile phone 100, and perform voice wakeup on the voice assistant by using a wakeup word. For example, the wakeup word may be "Hello, Little I" or "Little I, Little I". In this case, the voice assistant in the mobile phone 100 performs voice feedback, such as "Hi, I'm listening", and displays the first session interface, as shown in FIG. 6. The user initiates the user input to the mobile phone 100. For example, the user input is speech "Play a happy song", as shown in FIG. 7 and FIG. 8. A virtual button 601 in FIG. 6 is in the first state, and is used to indicate that the virtual button 601 waits to be triggered. A virtual button 601 in FIG. 7 is in the second state, and is used to indicate that the virtual button 601 is receiving the voice input. A virtual button 601 in FIG. 8 is in the third state, and the third state may also be referred to as the feedback state and is used to indicate that the virtual button 601 is processing the received speech. It should be understood that the foregoing manner of waking up the voice assistant is not limited to voice, or triggering may be performed in another manner such as text or a wireless connection.

For another example, when the mobile phone 100 detects "tell a story" by using the microphone 170C, the mobile phone 100 obtains two scenario features: Time: "21:22", "Friday"; User behavior: "Driving" and "Destination: Home". The processor 110 in the mobile phone 100 determines that the foregoing two scenario features successfully match the scenario feature group corresponding to the prediction rule 1 in the user intention model. The processor 110 determines, by using the prediction rule 1, the user intention based on the speech entered by the user and the two scenario features obtained by the mobile phone 100, and the user intention includes a basic intention "Tell a story" and a supplementary intention "Listen to audio of *The Lost Tomb*". The voice assistant sends a voice response, "I'm here. Do you want to resume listening to *The Lost Tomb?"* After receiving a positive reply sent by the user, the voice assistant starts the Himalaya application to resume playing based on a breakpoint location at which the mobile phone 100 stops playing *The Lost Tomb* when the scenario feature group corresponding to the prediction rule 1 is successfully matched last time. An interface of the Himalaya application is a full-screen interface, and the interface of the Himalaya application includes a prompt message: "Continue to play for you", as shown in FIG. 9.

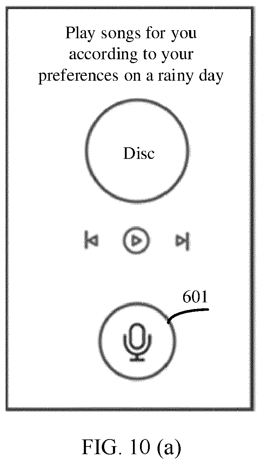

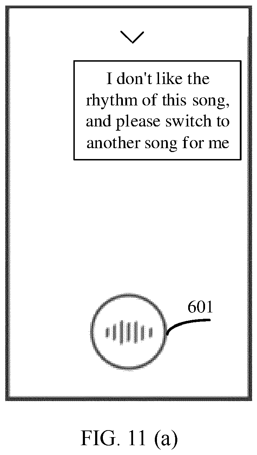

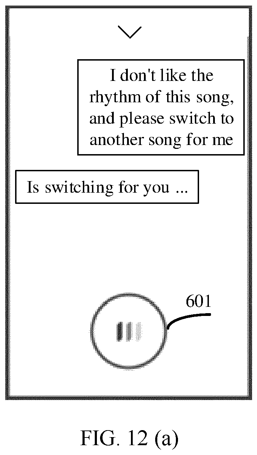

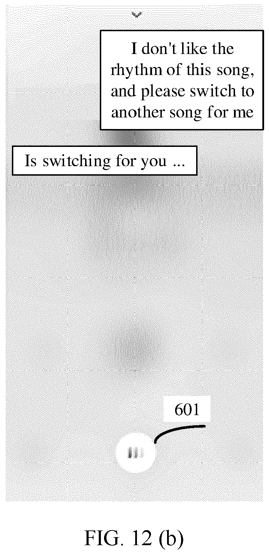

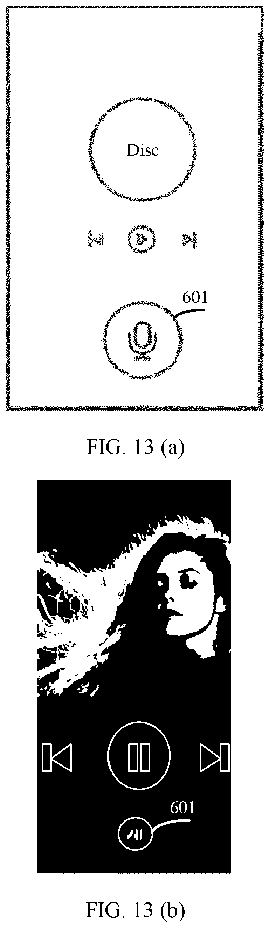

For still another example, a prediction rule (referred to as a prediction rule 3 for short below) included in the user intention model is: A user input is: "Listen to songs"; a scenario feature group is: Weather: "Rainy"; User behavior: "Driving"; and a user intention prediction result includes a basic intention and a supplementary intention, where the basic intention is "Listen to songs", and the supplementary intention is "Listen to quiet songs". When the mobile phone 100 detects "Listen to songs" by using the microphone 170C, the display screen 194 of the mobile phone 100 displays the first session interface. Specifically, a text display area of the first session interface includes text information. In this case, the text information is "Listen to songs". The mobile phone 100 obtains two scenario features: Weather: "Light rain"; User behavior: "Driving". The processor 110 in the mobile phone 100 determines that the foregoing two scenario features successfully match the scenario feature group corresponding to the prediction rule 3. The processor 110 determines, by using the prediction rule 3, a user intention based on the speech entered by the user and the two scenario features obtained by the mobile phone 100, and the user intention includes a basic intention "Listen to songs" and a supplementary intention "Listen to quiet songs". The voice assistant sends a voice reply: "I'm here. Do you want to listen to the song A?". At the same time, the text display area of the first session interface includes text information "I'm here. Do you want to listen to the song A?". After the voice assistant receives a positive reply sent by the user (for example, the user replies "OK" by using voice, and in addition, the text display area of the first session interface includes text information "OK"), the mobile phone 100 plays a prompt tone, such as a piece of crisp rain sound audio, and starts a music application such as QQ Music, and the interface displayed on the display screen 194 switches from the first session interface to an interface of the music application, starts to play the song A for the user, and the interface of the music application includes a prompt message "Play songs for you according to your preferences on a rainy day" and a virtual button 601. The virtual button 601 is in the first state, as shown in FIG. 10 (a). The song A herein may be a song played by the mobile phone 100 when the scenario feature group corresponding to the prediction rule 3 is successfully matched last time, in other words, a song to which the user listens on a rainy day last time. Further, the user triggers the virtual button 601 in the first state to perform a voice input: "I don't like the rhythm of this song, and please switch to another song for me.". In addition, as shown in FIG. 11 (a), the interface of the display screen 194 of the mobile phone 100 switches from the interface of the music application to the second session interface, and a size of the second session interface is the same as a size of the interface of the music application. A text display area of the second session interface includes text information "I don't like the rhythm of this song, and please switch to another song for me.", and the virtual button 601 is located on a top of the second session interface, and the virtual button 601 changes from the first state to the second state. After the user completes the voice input, the virtual button 601 changes from the second state to the third state, and the voice assistant replies "Is switching for you ...". The text display area of the second session interface includes text information "Is switching for you ...", as shown in FIG. 12 (a). Then, the interface displayed on the display screen 194 switches from the second session interface to an updated interface of the music application, and starts to play switched music. The virtual button 601 is located on a top of the interface of the music application, and the virtual button 601 changes from the third state to the first state, as shown in FIG. 13 (a).

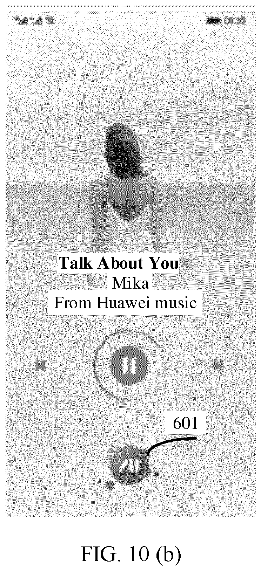

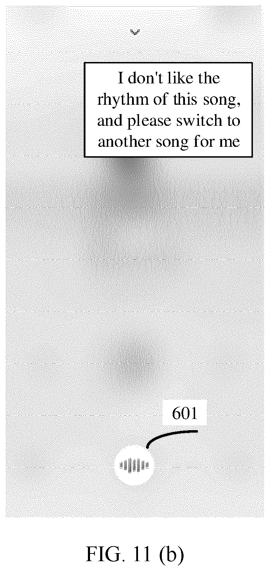

In addition, the background color of the second session interface may alternatively be determined based on a background color of the interface of the music application; in other words, color is dynamically selected. Specifically, the mobile phone 100 may be switched from FIG. 10 (b) to FIG. 11 (b). FIG. 11 (b) covers FIG. 10 (b) by using a translucent effect. FIG. 12 (a) also covers FIG. 10 (b) by using a translucent effect. FIG. 13 (a) shows the updated interface of the music application.

It should be understood that, in the foregoing example, the user triggers the virtual button 601 in the first state to perform a voice input: "Tell a story". The interface of the display screen 194 of the mobile phone 100 switches from the interface of the music application to the second session interface, the virtual button 601 is located on the top of the second session interface, and the virtual button 601 changes from the first state to the second state. After the user completes the voice input, the virtual button 601 changes from the second state to the third state, and the voice assistant replies "Is switching for you ...". Then, the interface displayed on the display screen 194 switches from the second session interface to an interface of an audio application, for example, the interface of the Himalaya application, the virtual button 601 is located on a top of the interface of the audio application, and the virtual button 601 changes from the third state to the first state. Alternatively, in the foregoing example, the user triggers the virtual button 601 in the first state to perform a voice input: "Check the weather". The interface of the display screen 194 of the mobile phone 100 switches from the interface of the music application to the second session interface, the virtual button 601 is located on the top of the second session interface, and the virtual button 601 changes from the first state to the second state. After the user completes the voice input, the virtual button 601 changes from the second state to the third state, and the voice assistant replies "Is checking for you ...". Then, the second session interface includes a weather checking result, and the virtual button 601 is located on the top of the second session interface. In this case, the virtual button 601 changes from the third state to the first state.

In the foregoing embodiments provided in this application, the method provided in the embodiments of this application is described from a perspective in which the terminal device (the mobile phone 100) is used as an execution body. To implement functions in the method provided in the foregoing embodiments of this application, the terminal device may include a hardware structure and/or a software module, to implement the functions in a form of the hardware structure, the software module, or a combination of the hardware structure and the software module. Whether a specific function in the foregoing functions is performed by the hardware structure, the software module, or the combination of the hardware structure and the software module depends on a specific application and a design constraint condition of the technical solutions.

An embodiment further provides a computer storage medium. The computer storage medium stores computer instructions. When the computer instructions are run on a terminal device, the terminal device may be enabled to perform one or more steps in the embodiment shown in any one of FIG. 4 to FIG. 13 (b), to implement the service invoking method in the foregoing embodiment.

An embodiment further provides a program product. When the program product is run on a computer, the computer is enabled to perform one or more steps in the embodiment shown in any one of FIG. 4 to FIG. 13 (b), to implement the service invoking method in the foregoing embodiment.

In addition, an embodiment of this application further provides an apparatus. The apparatus may be specifically a chip, a component, or a module. The apparatus may include a processor and a memory that are coupled to each other, and may further include a component such as a communications unit. The memory is configured to store computer-executable instructions. When the apparatus runs, the processor may execute the computer-executable instructions stored in the memory, so that the apparatus may be enabled to perform one or more steps in the embodiment shown in any one of FIG. 4 to FIG. 13 (b), to implement the service invoking method in the foregoing embodiment. The apparatus may be an electronic device such as a mobile phone, a tablet computer, a notebook computer, a smartwatch, a television set, a smart soundbox, a vehicle-mounted system, or a computer. For a more specific structure and function of the apparatus, refer to the foregoing descriptions in FIG. 3. Details are not described herein again.

The terminal device, the computer storage medium, the program product, or the chip provided in the embodiments is configured to perform the corresponding method provided above. Therefore, for beneficial effects that can be achieved, refer to the beneficial effects in the corresponding method provided above. Details are not described herein again.

A person skilled in the art should understand that the embodiments of the present invention may be provided as a method, a system, or a computer program product. Therefore, the present invention may use a form of hardware only embodiments, software only embodiments, or embodiments with a combination of software and hardware. Moreover, the present invention may use a form of a computer program product that is implemented on one or more computer-usable storage media (including but not limited to a disk memory, a CD-ROM, an optical memory, and the like) that include computer-usable program code.

The present invention is described with reference to the flowcharts and/or block diagrams of the method, the device (system), and the computer program product according to the embodiments of the present invention. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

These computer program instructions may alternatively be stored in a computer-readable memory that can indicate the computer or the another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

These computer program instructions may alternatively be loaded onto the computer or the another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

Although some embodiments of the present invention have been described, persons skilled in the art can make changes and modifications to these embodiments once they learn the basic inventive concept. Therefore, the following claims are intended to be construed as to cover the embodiments and all changes and modifications falling within the scope of the present invention. It is clear that a person skilled in the art can make various modifications and variations to the embodiments of the present invention without departing from the spirit and scope of the embodiments of the present invention. The present invention is intended to cover these modifications and variations provided that they fall within the scope of protection defined by the following claims and their equivalent technologies.

## Claims

1. A service invoking method, wherein the method is applied to a terminal device and comprises:
when detecting a user input, obtaining, by the terminal device, at least one scenario feature used to describe a scenario in which the terminal device is currently located, wherein the user input is used to indicate the terminal device to invoke a service; and
determining, by the terminal device based on the user input and the at least one scenario feature, a first parameter associated with the service, and invoking the service based on the first parameter, wherein the first parameter is a parameter stored by the terminal device when the terminal device uses the service in the scenario in which the terminal device is located last time.

2. The method according to claim 1, wherein the at least one scenario feature comprises at least one of time, a location, weather, a user behavior, a user status, a user expression, and sensor data.

3. The method according to claim 1 or 2, wherein the determining, by the terminal device based on the user input and the at least one scenario feature, a first parameter associated with the service comprises:
determining, by the terminal device, a user intention based on the user input and the at least one scenario feature; and
determining the first parameter based on the user intention.

4. The method according to claim 3, wherein the determining, by the terminal device, a user intention based on the user input and the at least one scenario feature comprises:
if the at least one scenario feature successfully matches a scenario feature group stored on the terminal device, determining, by the terminal device, the user intention based on the user input and the at least one scenario feature.

5. The method according to claim 4, wherein that the at least one scenario feature successfully matches the scenario feature group stored on the terminal device means that the at least one scenario feature is the same as or matches all scenario features in the scenario feature group, or the at least one scenario feature is the same as or matches a part of scenario features in the scenario feature group.

6. The method according to any one of claims 3 to 5, wherein the determining, by the terminal device, a user intention of a user based on the user input and the at least one scenario feature comprises:
determining, by the terminal device, the user intention of the user based on the user input and the at least one scenario feature by using a user intention prediction model.

7. The method according to claim 6, wherein the user intention prediction model comprises at least one prediction rule, an i^{th} prediction rule in the at least one prediction rule comprises an i^{th} user input set, an i^{th} scenario feature group, and an i^{th} user intention prediction result, and i is a positive integer; and
the determining, by the terminal device, the user intention of the user based on the user input and the at least one scenario feature by using a user intention prediction model comprises:
if the user input successfully matches a user input in the i^{th} user input set, and the at least one scenario feature successfully matches the i^{th} scenario feature group, determining, by the terminal device, that the user intention is the i^{th} user intention prediction result.

8. The method according to claim 6 or 7, wherein the user intention prediction model is obtained based on at least two user logs, and the user log comprises a historical user input, a historical scenario feature group, and a user intention truth.

9. The method according to any one of claims 1 to 8, further comprising:
displaying, by the terminal device, a first session interface when detecting the user input, wherein the first session interface comprises corresponding text of the user input.

10. The method according to claim 9, after the invoking, by the terminal device, the service based on the first parameter, further comprising:
switching, by the terminal device, from the first session interface to an interface corresponding to the service, wherein
the interface corresponding to the service comprises prompt information, wherein the prompt information is used to indicate that the service is invoked based on the at least one scenario feature; and/or the terminal device feeds back a prompt tone, wherein the prompt tone is used to indicate that the service is invoked based on the at least one scenario feature.

11. The method according to claim 10, further comprising:
displaying, by the terminal device, a virtual button in the interface corresponding to the service, wherein the virtual button is in a first state, and the first state is used to indicate a state of waiting to be triggered.

12. The method according to claim 11, further comprising:
when detecting that the virtual button is triggered, switching, by the terminal device, from the interface corresponding to the service to a second session interface, wherein the virtual button is displayed in a second state in the second session interface, and the second state is used to indicate that a state in which a new user input is being received.

13. The method according to claim 12, wherein the second session interface covers the interface corresponding to the service, a size of the second session interface is the same as a size of the interface corresponding to the service, and a background color of the second session interface is determined based on a background color of the interface corresponding to the service.

14. The method according to claim 12 or 13, further comprising:
when detecting the new user input, displaying, by the terminal device, the virtual button in a third state in the second session interface, wherein the third state is used to indicate a state in which the received new user input is being processed.

15. A terminal device, comprising one or more processors and one or more memories, wherein
the memory is configured to store one or more computer programs; and
when the one or more computer programs stored in the memory are executed by the processor, the terminal device is enabled to perform the following steps:
when detecting a user input, obtaining at least one scenario feature used to describe a scenario in which the terminal device is currently located, wherein the user input is used to indicate the terminal device to invoke a service; and
determining, based on the user input and the at least one scenario feature, a first parameter associated with the service, and invoking the service based on the first parameter, wherein the first parameter is a parameter stored by the terminal device when the terminal device uses the service in the scenario in which the terminal device is located last time.

16. The terminal device according to claim 15, wherein the at least one scenario feature comprises at least one of time, a location, weather, a user behavior, a user status, a user expression, and sensor data.

17. The terminal device according to claim 15 or 16, wherein when the one or more computer programs stored in the memory are executed by the processor, the terminal device is enabled to perform the following steps:
determining a user intention based on the user input and the at least one scenario feature; and
determining the first parameter based on the user intention.

18. The terminal device according to claim 17, wherein when the one or more computer programs stored in the memory are executed by the processor, the terminal device is enabled to perform the following step:
if the at least one scenario feature successfully matches a scenario feature group stored on the terminal device, determining the user intention based on the user input and the at least one scenario feature.

19. The terminal device according to claim 18, wherein that the at least one scenario feature successfully matches the scenario feature group stored on the terminal device means that the at least one scenario feature is the same as or matches all scenario features in the scenario feature group, or the at least one scenario feature is the same as or matches a part of scenario features in the scenario feature group.

20. The terminal device according to any one of claims 17 to 19, wherein when the one or more computer programs stored in the memory are executed by the processor, the terminal device is enabled to perform the following step:
determining the user intention of a user based on the user input and the at least one scenario feature by using a user intention prediction model.

21. The terminal device according to claim 20, wherein the user intention prediction model comprises at least one prediction rule, an i^{th} prediction rule in the at least one prediction rule comprises an i^{th} user input set, an i^{th} scenario feature group, and an i^{th} user intention prediction result, and i is a positive integer; and
when the one or more computer programs stored in the memory are executed by the processor, the terminal device is enabled to perform the following step: if the user input successfully matches a user input in the i^{th} user input set, and the at least one scenario feature successfully matches the i^{th} scenario feature group, determining that the user intention is the i^{th} user intention prediction result.

22. The terminal device according to claim 20 or 21, wherein the user intention prediction model is obtained based on at least two user logs, and the user log comprises a historical user input, a historical scenario feature group, and a user intention truth.

23. The terminal device according to any one of claims 15 to 22, wherein the terminal device further comprises a display screen, and when the one or more computer programs stored in the memory are executed by the processor, the terminal device is further enabled to perform the following step:
displaying a first session interface when detecting the user input, wherein the first session interface comprises corresponding text of the user input.

24. The terminal device according to claim 23, wherein when the one or more computer programs stored in the memory are executed by the processor, the terminal device is further enabled to perform the following step:
after the service is invoked based on the first parameter, switching from the first session interface to an interface corresponding to the service, wherein
the interface corresponding to the service comprises prompt information, wherein the prompt information is used to indicate that the service is invoked based on the at least one scenario feature; and/or a prompt tone is fed back, wherein the prompt tone is used to indicate that the service is invoked based on the at least one scenario feature.

25. The terminal device according to claim 24, wherein when the one or more computer programs stored in the memory are executed by the processor, the terminal device is further enabled to perform the following step:
displaying a virtual button in the interface corresponding to the service, wherein the virtual button is in a first state, and the first state is used to indicate a state of waiting to be triggered.

26. The terminal device according to claim 25, wherein when the one or more computer programs stored in the memory are executed by the processor, the terminal device is further enabled to perform the following step:
when detecting that the virtual button is triggered, switching from the interface corresponding to the service to a second session interface, wherein the virtual button is displayed in a second state in the second session interface, and the second state is used to indicate that a state in which a new user input is being received.

27. The terminal device according to claim 26, wherein the second session interface covers the interface corresponding to the service, a size of the second session interface is the same as a size of the interface corresponding to the service, and a background color of the second session interface is determined based on a background color of the interface corresponding to the service.

28. The terminal device according to claim 26 or 27, wherein when the one or more computer programs stored in the memory are executed by the processor, the terminal device is further enabled to perform the following step:
when detecting the new user input, displaying the virtual button in a third state in the second session interface, wherein the third state is used to indicate a state in which the received new user input is being processed.

29. A computer-readable storage medium, wherein the computer-readable storage medium comprises a computer program, and when the computer program is run on a terminal device, the terminal device is enabled to perform the method according to any one of claims 1 to 14.
